# EUROPEAN PATENT APPLICATION

(11) **EP 0 865 856 A2**
(43) Date of publication of application: **23.09.1998**
(21) Application number: 98103632.0
(22) Date of filing: 02.03.1998
(51) Int. Cl.: B23D 61/12

(54) **Damping blade for cutting stone materials**

(30) Priority: 06.03.1997 IT MI970494
(71) Applicant: Marmi Lame S.r.l., 54100 Massa (IT)
(72) Inventor: Mannella, Pierluigi, 19038 Sarzana (La Spezia) (IT); Perfetti, Francesco, 54038 Montignoso (IT)
(74) Representative: Faggioni, Giovanmaria, Dr.

(57) **Abstract**

The invention describes a blade (1) for gangsaws for sawing stone material, in particular frames for cutting granite with the supplying of a mixture essentially consisting of water, lime and grit, said blade (1) having, projecting from its surfaces, a plurality of mounted protrusions (3) made of resilient material and able to prevent flutter of the blade inside the cutting groove and to draw said mixture more efficiently.

## Description

The present invention relates to blades for cutting stone material; in particular, it relates to blades which work with abrasive mixtures.

One of the most common processing operations carried out on stone material consists in transforming blocks into slabs by means of gangsaws equipped with steel blades. According to the most traditional system, the gangsaw performs an reciprocating movement, during the course of which the blades slide along the cutting groove, remaining in contact with the bottom of the groove over a more or less long distance, while a mixture of water and abrasive granules (referred to as "grained grit") is supplied. As is known, cutting of the stone material is obtained not so much as a result of the direct action of the steel blades, but by the abrasive action of the mixture.

According to most updated techniques, however, so-called diamond-tipped blades are used, namely steel blades which have teeth in the form of diamond-coated segments which are fixed along the bottom edge of the blade and are solely responsible for the cutting action; the abrasive mixture in this case is replaced by ordinary water, which performs the function of cooling and removal of the stone dust resulting from cutting.

This modern technique using diamond-tipped blades is certainly very effective for the cutting of marble, where the technique of cutting with an abrasive mixture has mostly been abandoned now. However, it has not been effectively applied to the cutting of granite, where the wear of the diamond-coated segments is entirely disproportionate to the cutting efficiency achieved.

Therefore, in the art of cutting granite material, steel blades with straight edges are still used, together with a mixture based mainly on water, removed material, steel or cast iron grained grit, and lime. The cutting performance depends greatly, on the one hand, on the characteristics of the mixture and, on the other hand, on the characteristics of the sawing blade, with which the present invention is concerned.

A first problem which must be solved with this type of blade is that of obtaining optimum distribution of the abrasive mixture of water and grit, which is that which actually carries on the cutting path. The reciprocating movement of the blade already favours the homogeneous distribution of the mixture, but not in an adequate manner: in particular, along the middle portion of the cutting path, the mixture tends to recirculate poorly without being conveyed sufficiently along the whole length of the cutting path.

Another fairly important problem consists in the possibility of lateral bending which the blade has inside the cutting groove. In fact, the abrasive effect on the stone material arises mainly as a result of the indirect action of the steel blade which exerts with its bottom edge a strong pressure on the grit; this pressure pushes the grit not only towards the bottom of the cutting groove, but also partly towards the sides. Therefore, the abrasive action of the grit gradually forms a leading cutting breast which has a width greater than the thickness of the blade. Normally, in the case of blades with a thickness of 4-5 mm, the cutting groove has a width of 7-8 mm.

The blades, therefore, have ample opportunity to vibrate and "flutter" inside the cutting groove: this causes both undesirable scoring on the surface of the slabs and abnormal removal of mineral which adversely affects the perfect smoothness and parallel nature of the surfaces of the slabs resulting therefrom.

In order to improve both the cutting action and the duration of the blades, in the past blades provided with a varying design of grooves or holes have already been proposed; in particular, blades provided with vertical or slightly inclined ribs formed at regular intervals and projecting from the flat surface thereof have proved to be more effective than the other types. According to the operating principle of these blades, the ribs, during the reciprocating hunting movement of the blade-carrying frame, are able to displace the abrasive mixture more efficiently and make the blades themselves less deformable.

The ribs at first were made very accentuated with sharp edges, but this resulted in major problems in the rolling mill process thereof and they were very soon abandoned owing to the high costs against poor improvements in performance.

Subsequently, blades were proposed in which the ribs had a smaller height and had filleted edges (as, for example, in Italian Patent Application M193 A 000134 in the name of the same Applicant). These blades also did not prove to be entirely satisfactory. In this case, although the manufacture does not involve serious rolling problems, the conveying effect on the abrasive mixture is still not optimum. Moreover, the problem of the lateral bending is not effectively solved since the blade still has a reasonable freedom of lateral movement inside the cutting groove.

The object of the present invention is therefore to solve the abovementioned drawbacks. In particular, the aim is to provide a blade which, in addition to achieving perfect conveying of the abrasive mixture, above all is not subject to vibrations or lateral oscillations, so as to provide perfectly flat cuts without scoring on the surface of the slabs.

These objects are achieved by means of a blade for oscillating gangsaws used for the sawing of stone material, in particular gangsaws for cutting granite with the supplying of a mixture essentially consisting of water, lime and grit, said blade having a plurality of mounted protrusions made of resilient material projecting from its surfaces.

Further characteristic features and advantages of the blade according to the invention will appear more clearly, however, from the detailed description which follows of some preferred embodiments thereof, one of which is illustrated in the accompanying drawing showing a perspective view, not to scale, of the blade according to the invention.

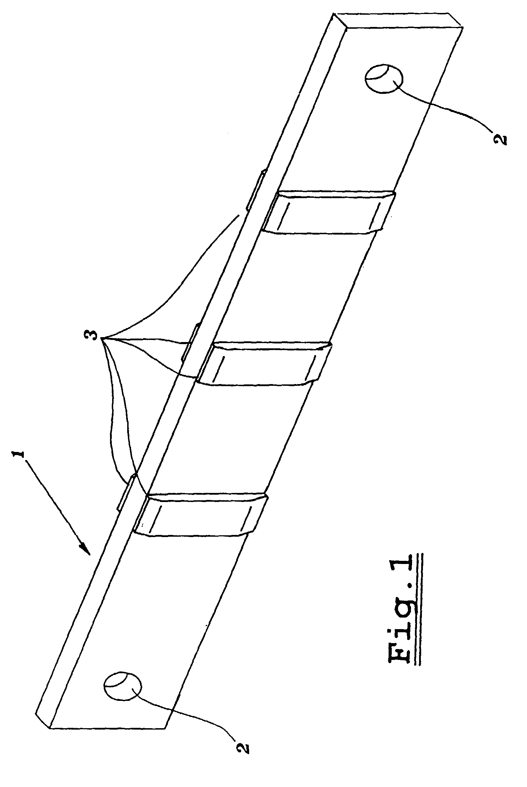

As can be seen in Fig. 1, the ends of a steel blade 1, for example with a rectangular cross-section, are provided with holes 2 suitable for fixing the blade itself to tie bars (not shown) of the gangsaw.

According to the invention, the side surfaces of the blade are provided with mounted protrusions 3 made of resilient material. These protrusions are located between the blade and the cutting groove surfaces of the granite, with no or a very small amount of play, so as to prevent, or at least rapidly dampen, any flutter or lateral oscillation of the blade inside the cutting groove, thus achieving a first object of the invention.

The material from which these protrusions are made is resilient so as to adapt itself locally to the cutting width and rapidly dampen any flutter and it is also sufficiently soft to prevent its contact with the surfaces of the granite slabs from causing scoring therein. The elasticity and softness of the mounted protrusions is also important for reducing the abrasive effects of the metal grit thereon, so as to lengthen the working life thereof.

For example, the protrusions are made of rubber, plastic or other resilient abrasion-resistant material.

For an optimum action of the protrusions 3, their thickness must be substantially such that the lateral play, which would otherwise exist between the blade and the cutting surfaces, is null. Therefore they have a thickness of 1 to 4 mm, preferably 1.8 to 2.2 mm.

Their arrangement and shape is not strictly binding, but preferably they have a width, in the longitudinal direction of the blade, of 40 to 100 mm and a height equal to the height of the blade. Even more preferably, the height of the protrusions is less than the height of the blade: for example, their top and/or bottom ends are situated at a suitable distance from the respective top and/or bottom edges of the blade. In particular, the bottom end of the protrusion (over about 1 cm) would in any case be rapidly eroded by the grit which tends to be deposited on the bottom of the cutting groove, thus contributing in a limited manner to the action over the mixture.

Moreover, the protrusions 3 can be tapered in the direction of the edges of the blade, as can be seen in Fig. 1.

Furthermore, on blades for normal operation, about two to four protrusions 3 are arranged over the length of the blade, being located at intervals of about 0.3 to 0.7 m from one another.

Preferably, the protrusions fixed on one surface of the blade have corresponding to them, positionwise, the protrusions fixed on the surface of the other side.

Since said protrusions are made of a material different from steel, they obviously cannot be formed as one piece with the blade; therefore, according to the invention, the protrusions of resilient material 3 are applied on the surfaces of the blades by means of riveting or bonding or, in the case where they are made of a rubber-based material, by means of vulcanization.

The perfect adhesion of these protrusions to the cutting surfaces ensures that, during the reciprocating movement of the blade, they exert a "pumping" action on the fluid abrasive mixture, in a similar manner to what is obtained between a piston and a cylinder, causing forced recycling of the mixture itself, being renewed frequently, thus achieving also another object of the invention.

This forced drawing action, by notably improving the action of the abrasive mixture, results in a more efficient overall cutting action performed with the blade according to the invention.

Although in the description and the drawing reference has been made to a smooth blade, the resilient protrusions adopted in the present invention may be combined with the ribs or the grooves of the blades of the known type, for example they may be applied to the ribbed blades disclosed in Italian Patent Application M193 A 000134 cited above.

It is understood, however, that the invention is not limited to the particular configurations illustrated above, which form only non-limiting examples of the scope of the invention, but that numerous variations are possible, all within the ability of a person skilled in the art, without thereby departing from the scope of the invention itself.

## Claims

1. Blade (1) for oscillating gangsaws for sawing stone material, in particular gangsaws for cutting granite with the supplying of abrasive mixture, characterized in that it has, projecting from its surfaces, a plurality of mounted protrusions (3) made of resilient material.

2. Blade (1) according to claim 1, in which the thickness of said protrusions (3) made of resilient material is 1 to 4 mm and preferably 1.8 mm to 2.2 mm.

3. Blade (1) according to claim 1 or 2, in which the width of the protrusions (3) in the longitudinal direction of the blade (1) is 10 to 100 mm.

4. Blade (1) according to claims 1 to 3, in which the height of said protrusions (3) is the same as that of the blade (1).

5. Blade (1) according to claims 1 to 3, in which the height of said protrusions (3) is less than the height of the blade (1).

6. Blade (1) according to claims 1 to 3, in which the ends of the protrusions are tapered towards the edges of the blade (1).

7. Blade (1) according to any one of the preceding claims, in which the resilient material of the protrusions (3) is a plastic abrasion-resistant material.

8. Blade (1) according to any one of claims 1) to 6), in which the protrusions (3) are made of a resilient rubber-based material.

9. Blade (1) according to claim 8, in which said rubber protrusions (3) are fixed on the surfaces of the blade by means of vulcanization.

10. Blade (1) according to any one of claims 1 to 8, in which said protrusions (3) of resilient material are fixed on the surfaces of the blade by means of bonding.

11. Blade (1) according to any one of claims 1 to 8, in which said protrusions (3) of elastic material are fixed on the surfaces of the blade by means of riveting.

12. Blade (1) according to any one of the preceding claims, in which said protrusions (3) are spaced apart by a distance of about 0.3 to 0.7 m.

13. Blade (1) according to any one of the preceding claims, in which said protrusions (3) are arranged in opposite pairs on the two surfaces of the blade (1).
